# EUROPEAN PATENT APPLICATION

(11) **EP 1 001 515 A2**
(43) Date of publication of application: **17.05.2000**
(21) Application number: 99121522.9
(22) Date of filing: 29.10.1999
(51) Int. Cl.: H02M 3/335, H04N 3/18, H04N 3/185

(54) **Switched-mode power supply**

(30) Priority: 10.11.1998 DE 19851789
(71) Applicant: DEUTSCHE THOMSON-BRANDT GMBH, 78048 Villingen-Schwenningen (DE)
(72) Inventor: Bicheler, Hans-Günter, 78052 Villingen-Schwenningen (DE); Rilly, Gerard, 78089 Unterkirnach (DE)
(74) Representative: Rossmanith, Manfred, Dr.

(57) **Abstract**

The invention specifies a switched-mode power supply in which a forward converter is combined with a flyback converter when only one transformer (TR) is used. The forward converter comprises the transformer (TR), a storage coil (L1), a switch (Sp) on the primary side and a storage capacitor (Ca) on the secondary side. The energy stored in the storage capacitor (Ca) is transferred to a further winding of the transformer (TR), for example a high-voltage winding (WH), using a switch (Ss) which operates on the flyback-converter principle and is arranged on the secondary side on a winding (W2) of the transformer (TR). In this arrangement, the power drawn from the output winding (WH) determines the value of the voltage to which the storage capacitor (Ca) is charged.

The switched-mode power supply can be used, in particular, for high-voltage generation for a television set or a computer monitor. To generate a high picture power, it can be connected to the mains directly via a bridge rectifier.

## Description

The invention relates to a switched-mode power supply having a transformer which has a primary winding, with a switching transistor connected in series with it, and secondary windings. Switched-mode power supplies of this type are used, for example, in television sets for generating stabilized operating voltages and the high voltage for the picture tube.

DE 41 01 504 A1 discloses a voltage supply for a television set which has a mains-connected first switched-mode power supply for providing operating voltages, with a second switched-mode power supply for generating a high voltage for the picture tube being connected to one of the operating voltages. The high voltage is stabilized as a result of the operating winding of the second switched-mode power supply having an inductance which depends on the current flowing through. For line deflection in the television set, a third switched-mode power supply is used which supplies the deflection current for the deflection coils. The switched-mode power supplies for the high voltage and for the deflection are synchronized by a line-frequency voltage. The use of a switched-mode power supply decoupled from the deflection for the high voltage has the advantage that a higher picture power can be provided because, in conventional television sets, power transfer in the high-voltage transformer takes place only in the short phase of line flyback.

The object of the present invention is to specify a switched-mode power supply which supplies a stable output voltage, particularly a high voltage for a television set, over a wide power range. This object is achieved by the invention specified in Claim 1. Advantageous developments of the invention are given in the subclaims.

The switched-mode power supply of the invention comprises the combination of a switched-mode power supply based on the forward-converter principle with a switched-mode power supply operating as a flyback converter, where only one transformer having two switches is used. In this arrangement, the forward converter charges a capacitor, arranged on the secondary side, whose energy is transferred to a further winding of the transformer by the flyback converter. The voltage across the capacitor is then dependent on the power tapped off at the third winding, the voltage on this winding being kept constant.

A coil is connected in series with the primary winding as an energy store. The transformer is reduced to a primary and a secondary winding for forward converter operation and is used only for voltage matching and mains isolation. It is not a storage element, has virtually no air gap and its inductances are essentially combined in the primary-side storage inductor, which represents the primary inductance effective for the circuit. With a maximum load, this inductor must not reach saturation.

The two switches of the switched-mode power supply are driven such that, during energy transfer from the primary side to the capacitor on the secondary side, the switch on the secondary side is closed, and when it opens, energy transfer takes place from the second winding to the third winding on the basis of the flyback-converter principle. During this phase, the switch on the primary side is open.

The first switch is advantageously driven with pulse-width modulation, according to the output loading of the switched-mode power supply, the phase angle of the falling edge of its control signal remaining unchanged while the second switch is operated with a constant pulse-width ratio or duty cycle. As a result of flyback-converter operation, the switched-mode power supply is particularly suitable for high-voltage generation, because a high flyback voltage is present across the secondary winding when the second switch is opened. The phase difference between the drive signals for the two switches is in this case chosen such that the peak value of the secondary flyback voltage coincides with the opening instant of the primary switch.

The switched-mode power supply can, in particular, be connected directly to the mains via a rectifier element. Mains isolation is in this case accomplished by the transformer and a driver transformer arranged upstream of the control connection of the first switch, so that only the first switch and the circuits surrounding it are connected to the zero potential of the mains.

The invention is explained in more detail below by way of example with the aid of schematic drawings, in which:
Figure 1 shows the principle of a switched-mode power supply having a first switch on the primary side and a second switch on the secondary side,
Figures 2a-e show voltages and currents produced in the switched-mode power supply of Figure 1, and
Figure 3 shows the switched-mode power supply of Figure 1 with circuits for high-voltage generation.

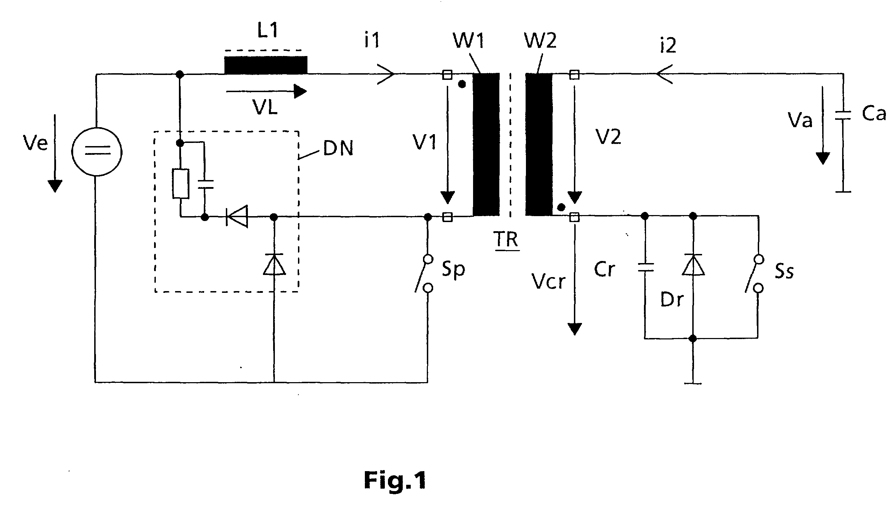

Figure 1 shows a transformer TR having a primary winding W1 and a second winding W2, arranged on the secondary side. A coil L1 and a first switch Sp are arranged in series with the primary winding W1, the coil L1 being arranged between an input DC voltage Ve and the winding W1. In addition, a damping network DN is also arranged on the winding W1 on the primary side for damping voltage spikes which occur when the switch Sp is opened. A capacitor Ca and a second switch Ss are connected in series with the winding W2. A freewheeling diode Dr and a flyback capacitor Cr are connected in parallel with the switch Ss.

If the switch Sp on the primary side is closed, a current il flows through the coil L1 and the primary winding W1, starting from the input voltage Ve. In this case, the coil L1 acts as a storage inductor, and the transformer TR is reduced to a primary and a secondary winding and is used only for voltage matching and mains isolation. It is not a storage element, has virtually no air gap and, when the secondary switch Ss is closed, this causes the capacitor Ca to be charged by the current il on the basis of the forward-converter principle. The inductances of the transformer TR are practically combined in the primary storage inductor L1, which represents the primary inductance effective for the circuit. With a maximum load, this inductor must not reach saturation.

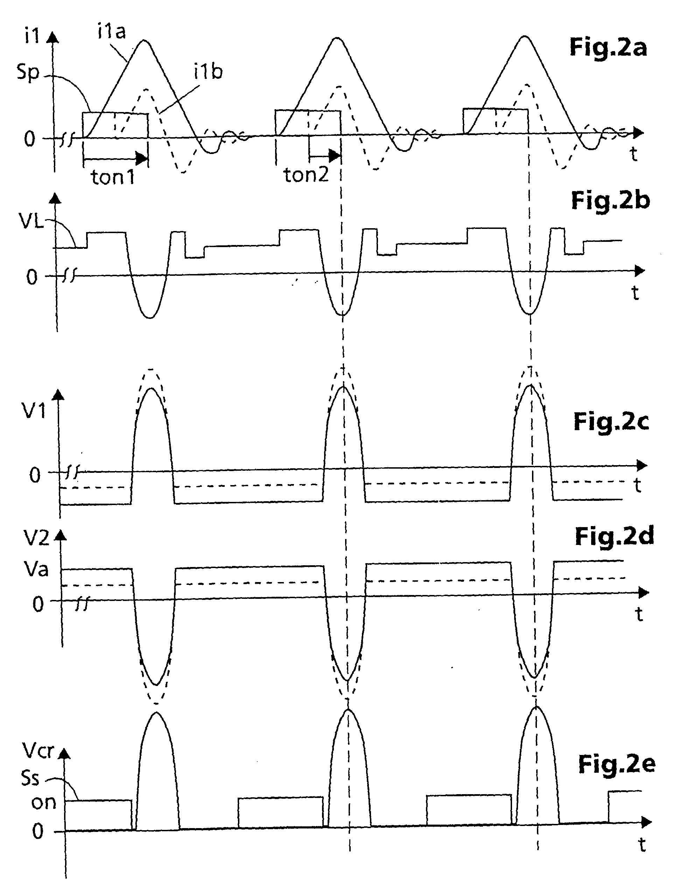

The operation of the switched-mode power supply of Figure 1 is now explained with the aid of voltage and current graphs as shown in Figures 2a - 2e. The voltages VL and V1 across the coil L1 and the primary winding Wl are shown in Figures 2b and 2c as a function of time t. Figure 2a shows the current il, using the solid curve for a case where there is high loading (ila, white picture on a television set), and using the dashed curve for a case where there is low loading (ilb, black picture) of the switched-mode power supply. In addition, the turned-on time of the switch Sp is shown for both cases in Figure 2a. The turned-on time tonl indicates the turned-on phase for the first switch Sp with high loading. The associated current ila rises in the turned-on phase, in accordance with the inductances of the coil L1 and the winding W1. If the switch Sp is opened, then the current ila continues to flow, as a result of self-inductance, via the damping network DN and dies down with few oscillation cycles.

Figure 2e shows the switch phases of the switch Ss on the secondary side. This switch is always operated with a duty cycle of 50%, irrespective of the load, that is to say with turned-on and turned-off times of equal length, so that in flyback-converter mode it enables maximum energy transfer to one or more output windings (not shown in Figure 1). If the switch Ss is opened, then the voltage Vcr rises steeply owing to the self-inductance of the winding W2, and the voltage V2 falls accordingly and changes polarity, as shown in Figure 2d. If the switch Ss is closed, then the voltage Va corresponds to the voltage V2 across the capacitor Ca. The voltage V1, Figure 2c, behaves in a corresponding manner to the voltage V2 as a result of the coupling of the transformer TR.

When the switch Sp is closed, the coil L1 has a high voltage VL across it, see Figure 2b. This builds up a magnetization in the coil L1 and, at the same time, the capacitor Ca is charged, so long as the second switch Ss is closed. If the switch Ss is now opened, that is to say the flow of current through the winding W2 is interrupted, then the voltage V1 on the winding W1 rises steeply and causes the voltage VL across the coil L1 to change polarity. At the same time, the voltage Vcr, Figure 2e, rises sharply, and the voltage V2 on the winding W2 falls accordingly and changes polarity. At roughly the vertex of the voltage Vcr, the switch Sp is now opened, and the primary current il has reached its maximum value at this instant. The phase difference between the primary and the secondary part is necessary for the operation of the circuit.

When the switched-mode power supply has a low loading, the dashed curves in Figures 2a, 2c and 2d are produced. In this case, the switch Sp is opened later, but is opened again with the same phase difference as the switch Ss, so that the mean value of the current il assumes correspondingly lower values but takes longer to die down. The turned-on time ton2, Figure 2a, is shortened to correspond to pulse-width modulation in this case. This causes the capacitor Ca to be charged to a lesser extent, as can be seen in Figure 2d.

The voltages shown in Figures 2a - 2e are represented in simplified form, in order to explain the way in which the switched-mode power supply works. For this reason, the voltage across the capacitor Ca was assumed to be constant, that is to say that only the level of its mean value is shown, whereas in reality it has the profile known from the S capacitor in the horizontal deflection circuit. Accordingly, the deformation of the voltage Vcr corresponding to the secondary flyback pulse was not taken into account for a high load. The voltage VL is produced from the difference between the two voltages Ve and V1 when the switch Sp is closed, and is influenced accordingly by the flyback pulse when the switch Sp is open.

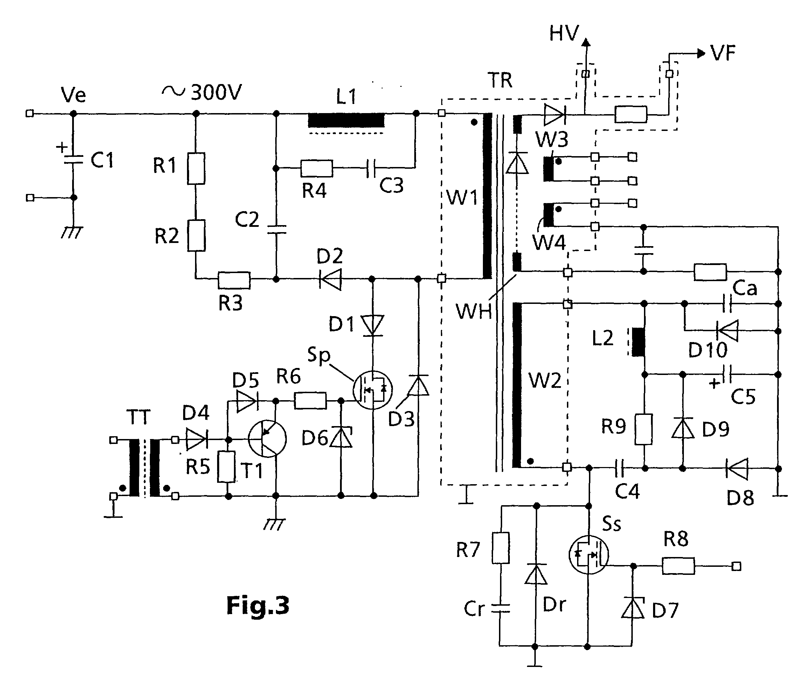

Figure 3 shows a circuit diagram of a switched-mode power supply for generating the high voltage, based on the principle of the switched-mode power supply shown in Figure 1. Corresponding components are denoted by identical reference symbols. In this illustrative embodiment, the input voltage Ve is generated directly from the mains using a rectifier (not shown in Figure 3) and using a storage capacitor C1. The transformer TR contains not only the two windings W1 and W2 but also further windings W3, W4 and a high-voltage winding WH, which is used to produce a high voltage HV of approximately 30 kV, for example to operate a picture tube in a television set or in a computer monitor. The windings W3 and W4 are used for regulation, voltage monitoring or for generating auxiliary voltages. The high-voltage winding WH is subdivided into subsidiary windings by diodes connected on the basis of the diode-split principle. In addition, a focus voltage VF for the picture tube is derived from the high voltage HV.

In this illustrative embodiment, MOSFETs are used for the switches Sp and Ss, but other types of switching transistors can also be used. The switch Sp is driven by means of a driver transformer TT and a transistor stage having a switching transistor T1. The transformers TR and TT accomplish mains isolation, and the circuit for controlling the switch Sp is arranged on the secondary side together with that for the second switch Ss. The diode D3 is a freewheeling diode. The diode D1 deactivates the freewheeling diode situated in the MOSFET Sp so that it does not get too hot during operation.

The damping network DN in Figure 1, in parallel with the storage inductor L1 and the winding W1, comprises resistors R1 - R4, capacitors C2 and C3 and a diode D2 in this illustrative embodiment, the polarity of the diode D2 being such that it conducts only when the switch Sp is open. This means that the energy built up in the storage inductor L1 during the on-phase of the switch Sp falls again during the turned-off time of Sp, some of the energy being returned to the capacitor C1 on the input side, being transferred to the secondary side or appearing as a power loss at the resistors R1 - R4.

The secondary side also has a damping network in parallel with the winding W2, having capacitors C4, C5, diodes D8, D9, a coil L2 and a resistor R9. It is used for damping the partial oscillations of the diode-split high-voltage transformer. These are uncontrolled free oscillations which are produced during flyback operation and can distort the regulating voltage which can be tapped off at the winding W3, a monitor winding. The capacitor C5 is in this case designed as a storage capacitor which is charged via the diode D9 and the capacitor C4. The diode 10 in parallel with the capacitor Ca causes this capacitor to be discharged completely when there is a high load.

The high voltage HV can be regulated in a known manner. For example, a regulating signal can be tapped off via the winding W3 and/or from the high voltage HV. As described with reference to Figures 1 and 2, the regulating signal is used to drive the switch Sp with pulse-width modulation via the driver transformer TT. The switch Ss is operated with a constant pulse-width ratio. In this case, the control signals for both switches can be synchronized with the horizontal deflection signal, for example in a television set.

The high-voltage generator described in Figure 3 can be used to generate a stable high voltage for a picture power of approximately 100 watts. Suitable applications are, in particular, for picture tubes of 36 inches or more, which operate at relatively high deflection frequencies, for example at 30 - 50 kHz. This means that the operating voltage and the deflection stage of the television set are decoupled from high-voltage generation. In this case, the transformer TR can be kept very compact.

## Claims

1. Switched-mode power supply, comprising a transformer (TR) with a primary winding (W1) and at least two further windings (W2, WH), with a first switch (Sp) arranged in series with said primary winding (W1),
the first switch (Sp) is connected as a forward converter and charges a capacitor (Ca) arranged on a second winding (W2) of the transformer (TR),
where a second switch (Ss) is connected in series with the second winding (W2), said second switch (Ss) operating in a flyback-converter mode and transferring the energy stored in the capacitor (Ca) to a third winding (WH).

2. Switched-mode power supply according to Claim 1, characterized in that a coil (L1) is connected in series with the primary winding (W1) as an energy store.

3. Switched-mode power supply according to Claim 1 or 2, characterized in that, during energy transfer from the primary winding (W1) to the second winding (W2), the second switch (Ss) is closed, and in that, during energy transfer from the second winding (W2) to the third winding (WH), the first switch (Sp) is open.

4. Switched-mode power supply according to Claim 1, 2 or 3, characterized in that the second switch (Ss) is operated with a constant duty cycle, and in that the first switch (Sp) is controlled with pulse-width modulation for load regulation.

5. Switched-mode power supply according to Claim 4, characterized in that a phase difference is chosen for the drive signals for the two switches (Sp, Ss) such that the peak value of the secondary flyback voltage (Vcr) coincides with the opening instant of the primary switch (Sp).

6. Switched-mode power supply according to one of the preceding claims, characterized in that the third winding (WH) is a high-voltage winding with diodes arranged on the basis of the diode-split method.

7. Switched-mode power supply according to Claim 6, characterized in that it can be synchronized by the synchronization signal for horizontal deflection in an image display unit.

8. Switched-mode power supply according to Claim 6 or 7, characterized in that it contains a control loop which is connected to a monitor winding (W3) and can be used to stabilize the output voltage of the high-voltage winding (WH).

9. Switched-mode power supply according to one of the preceding claims, characterized in that the primary winding (W1) is connected to the mains via a rectifier element, and in that mains isolation is accomplished by means of the transformer (TR) and by means of a driver transformer (TT) arranged upstream of the control connection of the first switch (Sp).
